# EUROPÄISCHE PATENTSCHRIFT

(11) **EP 2 787 750 B1**
(45) Veröffentlichungstag und Bekanntmachung des Hinweises auf die Patenterteilung: **11.01.2017**
(21) Anmeldenummer: 14163648.0
(22) Anmeldetag: 05.04.2014
(51) Int. Cl.: H04W 4/04

(54) **System und Verfahren zur Datenübertragung in der mobilen Kommunikation**
System and method for data transmission in mobile communication
Système et procédé de transmission de données dans la communication mobile

(30) Priorität: 05.04.2013 DE 102013005735
(43) Veröffentlichungstag der Anmeldung: 08.10.2014
(73) Patentinhaber: Mr. Signal GmbH, 81667 München (DE)
(72) Erfinder: Bierhals, Norbert, 81667 München (DE)
(74) Vertreter: Prinz & Partner mbB

(56) Entgegenhaltungen:
- US-A1- 2010 061 294
- US-B1- 8 261 231
- US-B1- 8 359 045

## Beschreibung

### GEBIET DER ERFINDUNG

Die Erfindung betrifft ein System mit einer Datenvermittlungseinheit zur Datenübertragung und einem mobilen Endgerät, das eingerichtet ist, um Daten von der Datenvermittlungseinheit zu empfangen. Zudem betrifft die Erfindung ein Verfahren zur Datenübertragung von den Einheiten bzw. Geräten sowie zur Steuerung der Einheiten bzw. der Geräte.

### TECHNISCHER HINTERGRUND

Aus dem Stand der Technik bekannte Systeme zur Datenübertragung mittels einer Datenvermittlungseinheit weisen Schnittstellen auf, die jeweils bidirektional arbeiten, sodass die beteiligten Einheiten Daten senden und empfangen. Dies führt dazu, dass einerseits die in den Einheiten verwendeten Schnittstellen zwischen einem Empfangs- und Sendemodus hin- und herschalten müssen und andererseits regelmäßig ein Bestätigungssignal des Empfangs der Daten senden, welches von der sendenden Datenvermittlungseinheit empfangen und verarbeitet werden muss. Dies erhöht die Datenrate und verlangsamt somit das System. Desweiteren werden aufgrund des hohen Datenaufkommens gerade bei mobilen Einheiten die Batterien bzw. die Akkumulatoren stark beansprucht, was einen hohen Stromverbrauch und somit eine kurze Akkulaufzeit zur Folge hat.

Aus der US 8,359,045 B1 ist ein System und ein Verfahren zur Datenübertragung bekannt, bei dem die Daten kabellos übertragen werden und die Kommunikation zwischen einer Datenvermittlungseinheit und einem mobilen Endgerät bidirektional erfolgt.

In der US 2010/0061294 A1 ist ein Funksystem beschrieben, bei dem mobile Endgeräte Daten von einer zentralen Datenvermittlungseinheit anfordern und direkt miteinander kommunizieren können.

Aus der US 8,261,231 B1 ist ein System und Verfahren bekannt, um mobile Applikationen in einfacher Weise zu erstellen und diese Applikationen zur weiteren Entwicklung anderen Nutzern zur Verfügung zu stellen.

### BESCHREIBUNG

Aufgabe der Erfindung ist es, ein System sowie die daran beteiligten Einheiten bzw. Geräte für eine vereinfachte Datenübertragung sowie Verfahren zur Vereinfachung der Datenübertragung und zur Steuerung der Einheiten bzw. Geräte bereitzustellen, wodurch insbesondere die Datenübertragung schneller und energiesparsamer erfolgt.

Die Aufgabe der Erfindung wird durch ein System nach Patentanspruch 1 gelöst.

Ferner wird die Aufgabe der Erfindung durch ein Verfahren nach Patentanspruch 12 gelöst.

Eine hierbei verwendete Datenvermittlungseinheit umfasst eine erste Schnittstelle, die eingerichtet ist, um bidirektional Daten zu einer Datenverarbeitungseinheit zu übertragen und eine zweite Schnittstelle, die eingerichtet ist, um monodirektional Daten an ein mobiles Endgerät zu übertragen. Somit verfügt die Datenvermittlungseinheit über zwei voneinander getrennte Schnittstellen, die jeweils zur Übertragung von Daten dienen.

Die Datenverarbeitungseinheit kann zudem einen Speicher aufweisen, wodurch die Datenverarbeitungseinheit als eine Art Zwischenspeicher fungiert, sodass die Daten auf dem Speicher hinterlegt werden können. Diese Daten können weiter übertragen werden, beispielsweise über die zweite Schnittstelle der Datenverarbeitungseinheit an ein mobiles Endgerät.

Ferner kann die Datenvermittlungseinheit derart eingerichtet sein, dass sie über die zweite Schnittstelle Informationsbestandteile an das mobile Endgerät übertragen kann und somit das Endgerät für die monodirektionale Übertragung von Daten einrichtet. Eine Kommunikation zwischen dem Endgerät und der Datenvermittlungseinheit findet somit nur auf einem monodirektionalen Weg statt, wobei die Datenvermittlungseinheit, insbesondere die zweite Schnittstelle, so eingerichtet ist, dass sie über die zweite Schnittstelle keine Daten empfangen kann. Dies beschleunigt den Datenübermittlungsprozess, da keine Abfrage bzw. Bestätigungssignale zwischen der Datenvermittlungseinheit und dem mobilen Endgerät hin- und hergeschickt werden.

Somit ist eine Übertragung von Daten ohne aufwendige Verschlüsselung möglich.

Bei dem mobilen Endgerät kann es sich um ein Mobiltelefon, ein Notebook, ein Tablet oder ein sonstiges Gerät zur Datenwiedergabe handeln.

Die zweite Schnittstelle kann derart ausgeführt sein, dass sie strukturell in der Lage wäre, bidirektional Daten zu senden bzw. zu empfangen, wobei die zweite Schnittstelle jedoch durch eine auf der Datenvermittlungseinheit hinterlegte Software derart eingerichtet ist, dass das Empfangen von Daten ausgeschaltet ist.

Alternativ ist es möglich, dass es sich bei der zweiten Schnittstelle um eine Schnittstelle handelt, die aufgrund ihrer strukturellen Ausgestaltung nur zum Senden von Daten geeignet ist.

Bei der zweiten Schnittstelle kann es sich um eine Schnittstelle handeln, die die Datenübertragung im Frequenzbereich des ISM-Bands nutzt.

In einer Ausführungsform handelt es sich bei dem benutzten Frequenzbereich um einen Bereich des ISM-Bands des Typs B.

In einer alternativen Ausführungsform kann es sich um einen Frequenzbereich des ISM-Bands des Typs A handeln.

Gemäß einer Ausführungsform kann die Datenvermittlungseinheit einen Verwaltungsdatenblock übertragen. Dieser Verwaltungsdatenblock besteht aus Informationsbestandteilen, wobei diese die Daten umfassen können, die zur Einrichtung des mobilen Endgeräts für die Übertragung nötig sind. Der Verwaltungsdatenblock kann von der Datenvermittlungseinheit jederzeit übertragen werden, sodass kein mobiles Endgerät im Sendeumkreis der Datenvermittlungseinheit zwingend vorhanden sein muss.

Die Übertragung des Verwaltungsdatenblocks kann über die zweite Schnittstelle der Datenvermittlungseinheit erfolgen.

Bei dem Verwaltungsdatenblock könnte es sich um einen Beacon Frame handeln, der einer der Verwaltungsdatenblöcke des IEEE 802.11 Standards für WLAN ist.

Mit anderen Worten bedeutet dies, dass die Datenvermittlungseinheit den aus Informationsbestandsteilen aufgebauten Verwaltungsdatenblock in den freien Raum sendet, um somit die Daten an ein sich potentiell im Umkreis befindliches mobiles Endgerät zu übertragen, die das mobile Endgerät für die Übertragung von Daten über die zweite Schnittstelle durch das Empfangen und Verarbeiten des Verwaltungsdatenblocks einrichten.

Der Verwaltungsdatenblock kann dabei einen ersten Informationsbestandteil haben, der einen festen, nicht einstellbaren Namensanteil aufweist. Dieser feste Namensanteil kann zur Identifizierung eines Systems fungieren, welchem die Datenvermittlungseinheit zugeordnet ist. Beispielsweise können mehrere Datenvermittlungseinheiten vorgesehen sein, die jedoch einem System zugeordnet sind. Zur Identifikation des zugeordneten Systems senden die Datenvermittlungseinheiten jeweils den gleichen festen, nicht einstellbaren Namensanteil aus, wodurch die Zuordnung eindeutig ist. Der feste, nicht einstellbare Namensanteil trägt somit die Informationen des übergeordneten Systems.

Ferner kann der Verwaltungsdatenblock einen zweiten Informationsbestandteil haben, der einen variablen Namensanteil aufweist. Dieser könnte in einem aus mehreren Datenvermittlungseinheiten bestehendem System beispielsweise für jede Datenvermittlungseinheit unterschiedlich sein, sodass diese aufgrund des variablen Namens voneinander unterschieden werden können. Dies bildet demnach die hierarchische Unterordnung des Systems.

Der ausgesendete Verwaltungsdatenblock könnte einen dritten Informationsbestandteil umfassen, der einen Serviceanteil aufweist. In dem Serviceanteil können Daten geschrieben sein, die zur Einrichtung des mobilen Endgeräts für den Empfang der Daten benötigt werden. Diese Daten können einen freien Kanal in dem verwendeten Frequenzbereich umfassen.

In einer alternativen Ausführungsform sendet die Datenvermittlungseinheit einen Verwaltungsdatenblock aus, der aus allen drei Informationsbestandteilen aufgebaut ist, sodass der feste, nicht einstellbare Namensanteil, der variable Namensanteil sowie der Serviceanteil von der Datenvermittlungseinheit ausgesendet werden. Somit sendet jede Datenvermittlungseinheit einen einzigartigen Verwaltungsdatenblock, der der entsprechenden Datenvermittlungseinheit zugeordnet werden kann.

Gemäß einer Ausführungsform ist die Datenvermittlungseinheit derart eingerichtet, dass sie einen passiven Scan zur Suche eines freien Kanals innerhalb des Frequenzbereichs der sendenden Schnittstelle durchführen kann. Insbesondere handelt es sich bei dem passiven Scan um ein Verfahren zur Trägerprüfung, das auch als Clear Channel Assessment (CCA) bekannt ist. Nach erfolgreicher Suche wird der freie Kanal ausgewählt und die Informationen zu dem freien Kanal in den Serviceanteil des Verwaltungsdatenblocks hinterlegt, sodass ein mobiles Endgerät beim Empfang des Verwaltungsdatenblocks für den Empfang von Daten auf dem freien Kanal eingerichtet wird.

Bei der sendenden Schnittstelle kann es sich um die zweite Schnittstelle der Datenvermittlungseinheit handeln.

Insbesondere kann die Datenvermittlungseinheit portabel ausgeführt sein, wobei sie ein Identifikationsmittel aufweist. Somit kann die Datenvermittlungseinheit an verschiedenen Orten eingesetzt werden und ist über das Identifikationsmittel eindeutig identifizierbar, sodass beispielsweise neue Daten auf die Datenvermittlungseinheit gespielt werden können. Ferner ist damit sichergestellt, dass die neuen Daten auf die richtige Datenvermittlungseinheit gespielt werden, wenn sich mehrere Datenvermittlungseinheiten in einem System befinden.

Bei dem Identifikationsmittel kann es sich um eine Sim-Karte oder einen Sim-Chip handeln, wodurch die Datenvermittlungseinheit über das Mobilfunknetz, GSM-Netz, Daten senden und empfangen kann.

Zum Überspielen von Daten auf die Datenvermittlungseinheit kann die erste Schnittstelle der Datenvermittlungseinheit benutzt werden. Die erste Schnittstelle kann somit derart ausgeführt sein, dass sie Daten in dem Frequenzbereich des GSM-Netzes übertragen und empfangen kann.

In einer alternativen Ausführungsform kann die erste Schnittstelle Daten über WLAN, Internetkabelanschluss, USB etc. übertragen und empfangen.

Die Datenvermittlungseinheit überträgt ferner Datenpakete, die Informationen wie Bild-, Video-, Text- oder Audiodateien enthalten können. Dies bedeutet, dass die Datenvermittlungseinheit nicht nur zum Einrichten des mobilen Endgeräts Daten überträgt, sondern auch Datenpakete aussendet, die auf einem mobilen Endgerät wiedergebbare Informationen enthält.

Die Übertragung der Datenpakete erfolgt gemäß einer Ausführungsform über die zweite Schnittstelle, sodass die zweite Schnittstelle nicht nur zur Einrichtung eines mobilen Endgeräts dient, sondern auch als Übertragungsmittel für auf dem mobilen Endgerät darstellbare Informationen.

In einer Ausführungsform weist die Datenvermittlungseinheit eine Software auf, die einen Pseudo-Empfänger simulieren kann. Der Pseudo-Empfänger wird bei einer Datenübertragung verwendet, die eine Zieladresse benötigt. Die Software simuliert diese Zieladresse, sodass die Daten an die simulierte Adresse übertragen werden.

Mit anderen Worten suggeriert die auf der Datenvermittlungseinheit vorhandene Software eine konkrete Zieladresse, an die die Daten beziehungsweise die Datenpakete versendet werden. In Wirklichkeit werden die Daten in die Umgebung gesendet und können von jeglichem Empfänger, der auf den Kanal des Frequenzbereichs der sendenden Schnittstelle eingestellt ist, empfangen werden.

Das Senden der Daten und Datenpakete kann über die zweite Schnittstelle erfolgen.

Bei dem Pseudo-Empfänger kann es sich um eine Pseudo-Empfänger Broadcast Adresse (PEBA), insbesondere um eine feste MAC-Adresse, handeln.

Ferner ist ein mobiles Endgerät vorgesehen, das derart eingerichtet ist, dass es bestimmte Daten empfangen kann.

Bei diesen Daten handelt es sich vorzugsweise um die Daten, die in dem Frequenzbereich liegen, in der die zweite Schnittstelle der Datenvermittlungseinheit Daten sendet.

Das mobile Endgerät ist insbesondere derart eingerichtet, dass es einen empfangenen Verwaltungsdatenblock in die Informationsbestandteile maskiert. Hierzu weist das mobile Endgerät vorzugsweise eine Software auf.

Die Software kann ferner einen Informationsbestandteil des Verwaltungsdatenblocks überprüfen, wobei dies insbesondere der feste, nicht einstellbare Namensanteil ist. Somit überprüft die Software die Zugehörigkeit der empfangenen Verwaltungsdatenblöcke zu einem System.

Die Software kann dabei in einer ersten Ebene die verschiedenen Systeme darstellen und in einer untergeordneten Ebene die zu einem System gehörenden verschiedenen Datenvermittlungseinheiten. Die Software kann dies aufgrund der Struktur der Verwaltungsdatenblöcke unterscheiden, die von den Datenvermittlungseinheiten gesendet werden.

Die auf dem mobilen Endgerät vorhandene Software kann dazu eine Liste erstellen, die auf einem Bildschirm des mobilen Endgeräts angezeigt wird, wobei die Liste Informationsbestandteile aller empfangenen Verwaltungsdatenblöcke umfasst. Die empfangenen Verwaltungsdatenblöcke sind jeweils verschiedenen Datenvermittlungseinheiten zugeordnet, da jede Datenvermittlungseinheit einen charakteristischen Verwaltungsdatenblock aussendet. Die Verwaltungsdatenblöcke können dem Nutzer des mobilen Endgeräts angezeigt werden, sodass dieser eine Auswahl aus der Liste der empfangenen Datenvermittlungseinheiten treffen kann.

Gemäß einer Ausführungsform handelt es sich bei den in der Liste angezeigten Informationsbestandteilen in einer obersten Ebene der Software um die Systeme, die aufgrund der festen, nicht einstellbaren Namensanteile charakterisiert sind.

In einer untergeordneten Ebene können die einzelnen Datenvermittlungseinheiten aufgrund der variablen Namen, die Informationsbestandteil eines Verwaltungsdatenblocks sein können, angezeigt werden.

Somit kann ein Nutzer eines mobilen Endgeräts aufgrund der installierten Software zunächst ein System und danach eine Auswahl der zu empfangenen Daten einer der dem System zugeordneten Datenvermittlungseinheiten treffen.

Gemäß einer Ausführungsform ist vorgesehen, dass die Software des mobilen Endgeräts einen Pseudo-Empfänger simuliert, der eine Empfangsadresse simuliert, wenn diese für die Kommunikation benötigt wird. Die Software des mobilen Endgeräts simuliert somit eine bidirektionale Kommunikation, wobei lediglich eine monodirektionale Kommunikation stattfindet.

Bei dem simulierten Pseudo-Empfänger kann es sich um eine Pseudo-Empfänger Broadcast Adresse (PEBA) handeln, insbesondere um eine feste MAC-Adresse.

Ferner kann das System eine Datenverarbeitungseinheit umfassen, die eine Schnittstelle aufweist, die derart eingerichtet ist, Daten bidirektional zu empfangen und zu senden.

Die Schnittstelle der Datenverarbeitungseinheit nutzt insbesondere das Mobilfunknetz bzw. das GSM-Netz. Somit kann die Datenverarbeitungseinheit mit einer Datenvermittlungseinheit über eine gemeinsame Schnittstelle kommunizieren. Mittels dieser Schnittstelle können somit Daten von der Datenverarbeitungseinheit auf eine mit ihr zusammenwirkende Datenvermittlungseinheit übertragen werden.

In einer alternativen Ausführungsform der Datenverarbeitungseinheit kann die Schnittstelle Daten über WLAN, Internetkabelanschluss, USB etc. austauschen.

Bei der verwendeten Schnittstelle zur Übertragung der Daten von der Datenverarbeitungseinheit auf die Datenvermittlungseinheit kann die erste Schnittstelle der Datenvermittlungseinheit verwendet werden.

In einer Ausführungsform ist vorgesehen, dass die Datenverarbeitungseinheit eine weitere Schnittstelle aufweist. Die weitere Schnittstelle kann so eingerichtet sein, dass sie bidirektional Daten austauschen kann, also empfangen und senden kann. Somit können beispielsweise Befehle zur Datenverarbeitungseinheit gesendet werden und die Datenverarbeitungseinheit kann Rückmeldungen oder Bestätigungssignale senden.

In einer alternativen Ausführungsform ist vorgesehen, dass die weitere Schnittstelle derart eingerichtet ist, dass sie Daten oder Befehle lediglich monodirektional empfangen kann, wobei sie über die weitere Schnittstelle keine Daten senden kann. Dies führt zu einer Datenverarbeitungseinheit, die über die weitere Schnittstelle lediglich Befehle empfangen kann und diese verarbeitet, wobei die Datenverarbeitungseinheit keine Bestätigungssignale senden kann.

Insbesondere ist vorgesehen, dass die Datenverarbeitungseinheit ein Speichermedium aufweist, auf dem Datensätze hinterlegt werden können, die zur Übertragung mittels der einen Schnittstelle abgerufen werden können.

In einer Ausführungsform ist vorgesehen, dass die Datenverarbeitungseinheit eine Software aufweist, mittels der ein Web-Zugriff auf die Datenverarbeitungseinheit möglich ist, sodass die Datenverarbeitungseinheit von außerhalb gesteuert werden kann.

Die weitere Schnittstelle kann dabei derart ausgeführt sein, dass die Steuerung über das Internet, den Mobilfunk, USB oder ein WiFi-Netz erfolgt.

Bei der Datenverarbeitungseinheit kann es sich beispielsweise um einen Server handeln.

Gleiche oder ähnliche Vorteile, wie sie bereits im Hinblick auf die einzelnen Komponenten erwähnt wurden, treffen auch auf Verfahren zur Steuerung und Datenübertragung zu, die nachfolgend angegeben sind.

Die Erfindung stellt auch ein Verfahren zur Übertragung von Daten von einer Datenvermittlungseinheit zu einem mobilen Endgerät bereit. Die Datenvermittlungseinheit kann dabei über die zweite Schnittstelle einen Verwaltungsdatenblock aussenden und das mobile Endgerät empfängt die ausgesandten Daten.

Gemäß einem Aspekt der Erfindung kann vor dem Senden des Verwaltungsdatenblocks über die zweite Schnittstelle nach einem freien Kanal in dem Frequenzbereich der zweiten Schnittstelle gesucht werden und die Informationen nach erfolgreicher Suche in den Verwaltungsdatenblock, insbesondere den Serviceanteil des Verwaltungsdatenblocks, geschrieben werden.

Die Datenvermittlungseinheit kann dann Datenpakete senden. Die Datenvermittlungseinheit kann vor dem Senden der Datenpakete einen Pseudoempfänger simulieren, insbesondere eine Pseudo-Empfänger Broadcast-Adresse.

Die Erfindung stellt auch ein Verfahren zur Verarbeitung von empfangenen Daten an einem mobilen Endgerät bereit. Das mobile Endgerät kann einen empfangenen Verwaltungsdatenblock überprüfen, insbesondere den festen Namensanteil. Das mobile Endgerät (Software) kann den empfangenen Verwaltungsdatenblock auf einen Informationsbestandteil, insbesondere den variablen Namensanteil, maskieren und speichern. Das mobile Endgerät (Software) kann den empfangenen Verwaltungsdatenblock auf einen Serviceanteil maskieren und speichern. Das mobile Endgerät kann eine Liste erstellen, die Informationsbestandteile, insbesondere die variablen Namen aller empfangenen Verwaltungsdatenblöcke, anzeigen, sodass ein Benutzer des mobilen Endgeräts eine Datenvermittlungseinheit auswählen kann. Die Software des mobilen Endgeräts kann einen Pseudo-Empfänger simulieren, insbesondere eine Pseudo-Empfänge Broadcast-Adresse. Daten können dann von der Datenverarbeitungseinheit auf eine Datenvermittlungseinheit übertragen und gespeichert werden. Daten auf die Datenverarbeitungseinheit gespeichert werden können.

Die Daten können auf der Datenverarbeitungseinheit von einer berechtigten Person oder dem Eigentümer der Daten, insbesondere über eine Web-Oberfläche, freigegeben werden.

Die Erfindung stellt auch ein Verfahren zur Datenübertragung mit einem System gemäß Aspekten der Erfindung bereit. Dementsprechend kann von der Datenvermittlungseinheit bspw. ein passiver Scan durchgeführt werden, um einen freien Kanal, insbesondere im Frequenzbereich der zweiten Schnittstelle, zu finden. Der gefundene freie Kanal kann seitens der Datenvermittlungseinheit in einen Informationsbestandteileines Verwaltungsdatenblocks, insbesondere in den Serviceanteil, geschrieben werden. Die Datenvermittlungseinheit kann den Verwaltungsdatenblock, insbesondere über die zweite Schnittstelle, übertragen und das mobile Endgerät kann den von der Datenvermittlungseinheit ausgesendeten Verwaltungsdatenblock erkennen und diesen überprüfen. Die Datenvermittlungseinheit kann Datenpakete, insbesondere an einen Pseudo-Empfänger übertragen. Das mobile Endgerät kann Datenpakete von der Datenvermittlungseinheit empfangen, und insbesondere einen Pseudo-Empfänger simulieren. Das mobile Endgerät kann die empfangenen Datenpakete direkt wiedergeben. Alternativ oder zusätzlich können diese Datenpakete auf einem auf dem mobilen Endgerät vorhandenen Speicher gespeichert werden.

Das mobile Endgerät, insbesondere die auf dem mobilen Endgerät vorhandene Software, kann eine Liste aller empfangenen Datenvermittlungseinheiten erstellen, die dem Benutzer angezeigt werden. Das mobile Endgerät kann den festen, nicht einstellbaren Namensanteil des Verwaltungsdatenblocks überprüfen, nach erfolgreicher Überprüfung des festen Namensanteils den Verwaltungsdatenblock auf den variablen Namensanteil maskieren und diesen speichern. Das mobile Endgerät kann den Verwaltungsdatenblock auf den Serviceanteil maskieren und diesen speichern. Im Anschluss an die durchgeführten Teilschritte kann der Anwender des mobilen Endgeräts eine Datenvermittlungseinheit auswählen, insbesondere aus der von der Software erstellten Liste.

Es kann eine Datenverarbeitungseinheit vorgesehen die, die die Daten nach Freigabe durch eine berechtigte Person oder Eigentümer der Daten über die Schnittstelle übermittelt, die mit der ersten Schnittstelle der Datenvermittlungseinheit kommuniziert, wobei die Datenvermittlungseinheit die Daten von der Datenverarbeitungseinheit empfängt und direkt über die erste Schnittstelle an das mobile Endgerät übermittelt oder auf seinem Speicher speichert, wobei die Datenfreigabe durch die berechtigte Person oder Eigentümer der Daten über die weitere Schnittstelle erfolgt.

### BESCHREIBUNG DER FIGUREN

Im Folgenden wird die Erfindung unter Bezugnahme auf die Zeichnungen näher erläutert, dabei zeigt:
FIG. 1 eine schematische Skizze des erfindungsgemäßen Systems,
FIG. 2 einen schematischen Aufbau eines Verwaltungsdatenblocks,
FIG.3 ein Flussdiagramm der ablaufenden Verfahren in einer Datenvermittlungseinheit gemäß einer Ausführungsform, und
FIG. 4 ein Flussdiagramm der ablaufenden Verfahren auf einem mobilen Endgerät gemäß der Ausführungsform aus Figur 2.

### DETAILLIERTE BESCHREIBUNG

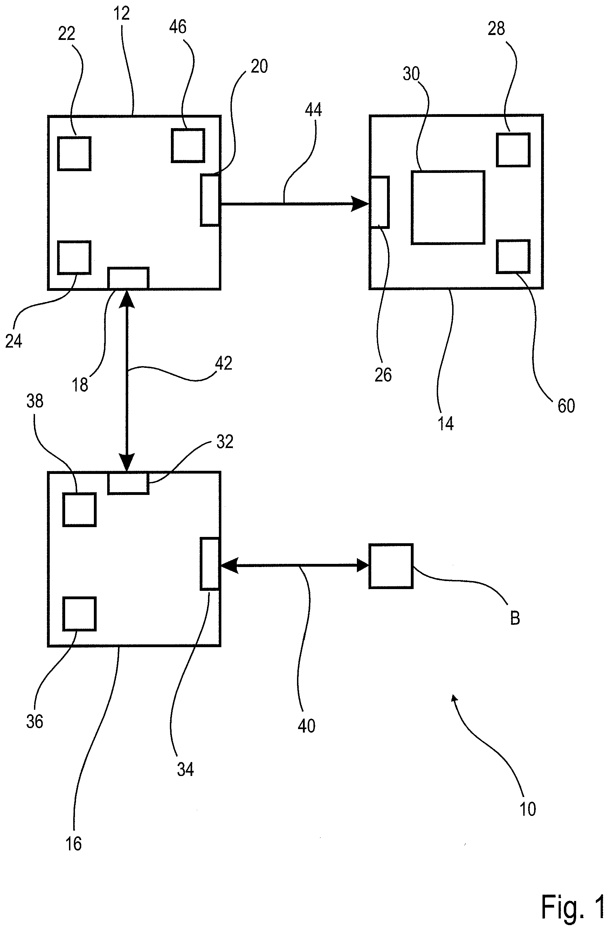

FIG. 1 zeigt eine Skizze einer Ausführungsform des erfindungsgemäßen Systems 10, das eine Datenvermittlungseinheit 12, ein mobiles Endgerät 14 und eine Datenverarbeitungseinheit 16 aufweist.

Die Datenvermittlungseinheit 12 ist dabei als Zwischenstation zwischen der Datenverarbeitungseinheit 16 und dem mobilen Endgerät 14 vorgesehen. Die Datenvermittlungseinheit 12 weist eine erste Schnittstelle 18 sowie eine zweite Schnittstelle 20 auf. Ferner weist die Datenvermittlungseinheit 12 einen Speicher 22, auf dem Daten gespeichert werden können, sowie eine Software 24 auf.

Das mobile Endgerät 14 weist ebenfalls eine Schnittstelle 26 auf, die zur Kommunikation mit der zweiten Schnittstelle 20 der Datenvermittlungseinheit 12 eingerichtet ist. Ferner weist das mobile Endgerät 14 eine Software 28 und einen Bildschirm 30 auf, um Informationen anzuzeigen, die von der Software 28 erzeugt werden.

Die Datenverarbeitungseinheit 16 weist eine Schnittstelle 32 auf, die zur Kommunikation mit der ersten Schnittstelle 18 der Datenvermittlungseinheit 12 eingerichtet ist. Zudem weist die Datenverarbeitungseinheit 16 eine weitere Schnittstelle 34 auf. Eine Software 36 ist zur Benutzerfreundlichkeit auf der Datenverarbeitungseinheit 16 implementiert. Ferner weist die Datenverarbeitungseinheit 16 ein Speichermedium 38 zur Speicherung von Daten auf. Die Software 36 erlaubt es einem Benutzer B von außerhalb Zugriff auf die Datenverarbeitungseinheit 16 zu nehmen, indem er Befehle über einen Kommunikationsweg 40 an die Datenverarbeitungseinheit 16 sendet. Der Kommunikationsweg 40 kann sowohl mono- als auch bidirektional sein.

Die Datenverarbeitungseinheit 16 kommuniziert ferner über die eine Schnittstelle 32 mit der ersten Schnittstelle 18 der Datenvermittlungseinheit 12, wobei die Schnittstellen 18, 32 derart eingerichtet sind, dass eine bidirektionale Kommunikation 42 möglich ist.

Des Weiteren überträgt die Datenvermittlungseinheit 12 Daten über die zweite Schnittstelle 20 an die eine Schnittstelle 26 des mobilen Endgeräts 14, wobei die beiden Schnittstellen 20, 26 derart eingerichtet sind, dass sich eine monodirektionale Übertragung 44 ergibt, die lediglich das Senden von Daten von der Datenvermittlungseinheit 12 an das mobile Endgerät 14 ermöglicht.

Die Funktionsweise des Systems 10 ist dabei wie folgt:

Ein Benutzer B, der Eigentümer von Daten oder zumindest berechtigt ist, gibt die Daten, die übertragen werden sollen, frei. Hierzu benutzt der Benutzer B ein von der Software 36 der Datenverarbeitungseinheit 16 erzeugtes Web-Interface, sodass der Benutzer beispielsweise über Internet per Web-Zugriff auf die als Server ausgebildete Datenverarbeitungseinheit 16 zugreift. Dies geschieht über die weitere Schnittstelle 34.

Soll dem Benutzer B eine Rückmeldung der Datenverarbeitungseinheit 16 angezeigt werden, so kann die weitere Schnittstelle 34 auch für die bidirektionale Kommunikation eingerichtet werden. Vorzugsweise ist dies ebenfalls über die Software 36 möglich.

Der Benutzer B gibt somit die auf dem Speichermedium 38 vorhandenen Daten frei, wodurch diese von dem Speichermedium über den bidirektionale Kommunikationsweg 42 zwischen der ersten Schnittstelle 18 der Datenvermittlungseinheit 12 und der einen Schnittstelle 32 der Datenverarbeitungseinheit 16 übertragen werden.

Die Datenvermittlungseinheit 12 ist portabel ausgebildet, wobei für eine eindeutige Zuordnung ein Identifikationsmittel 46 vorgesehen ist. Dies ist in Form einer Sim-Karte oder eines Sim-Chips möglich, sodass die Datenvermittlungseinheit 12 mit der Datenverarbeitungseinheit 16 über das Mobilfunknetz kommuniziert, wodurch große Distanzen überbrückbar sind.

Die von der Datenverarbeitungseinheit 16 übertragenen Daten können in der Datenvermittlungseinheit 12 im Speicher 22 hinterlegt werden, sodass diese von der Datenvermittlungseinheit 12 jederzeit abrufbar sind.

Zur Übertragung der Daten von der Datenvermittlungseinheit 12 auf ein mobiles Endgerät 14 führt die Datenvermittlungseinheit 12 einen passiven Scan im Frequenzbereich der zweiten Schnittstelle 20 durch, um einen freien Kanal in diesem Frequenzbereich zu finden. Sobald der passive Scan erfolgreich verlaufen und ein freier Kanal gefunden worden ist, schreibt die Software 24 der Datenvermittlungseinheit 12 die Informationen zu dem freien Kanal in einen Verwaltungsdatenblock 48 als Informationsbestandteil.

Der Verwaltungsdatenblock 48 umfasst neben dem Informationsbestandteil zu dem freien Kanal weitere Informationsbestandteile, die einen festen, nicht einstellbaren Namensanteil 50, der dem System zugeordnet ist, und einen variablen Namensanteil 52, der der entsprechenden Datenvermittlungseinheit 12 zugeordnet ist, umfasst. Die Informationen zu dem freien Kanal werden in einen Serviceanteil 54 des Verwaltungsdatenblocks 48 geschrieben.

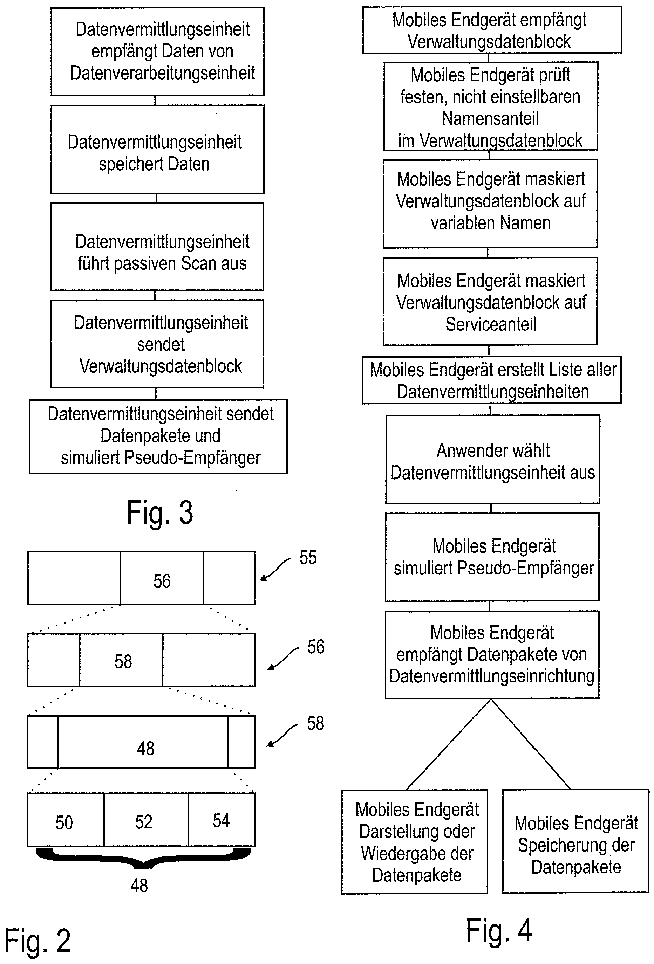

In Figur 2 ist eine schematische Übersicht des Aufbaus des Datenrahmens gezeigt. Ein Layer 55 weist einen Managementframe 56 auf. Neben dem Managementframe 56 werden die Datenpakete übertragen. Der Managementframe 56 weist unter anderem einen Beacon-Frame 58 auf, in dem der Verwaltungsdatenblock 48 geschrieben wird. Der Verwaltungsdatenblock 48 wiederum weist die bereits genannten drei Anteile festen, nicht einstellbaren Namensanteil 50, den variablen Namensanteil 52 sowie den Serviceanteil 54 auf. Der Verwaltungsdatenblock 48 kann eine maximale Länge von 32 Bytes umfassen.

Eine Möglichkeit könnte dabei sein, dass ein 802.11 Mac Layer 55 verwendet wird, der unter anderem den Managementframe 56 als Bestandteil hat. Der Layer 55 überträgt ferner die zu übertragenden Datenpakete. Der Managementframe 56 weist wiederum unter anderem den Beacon-Frame 58 auf. Der Beacon-Frame 58 weist einen SSID (Service Set Identifier) auf, der dem Verwaltungsdatenblock 48 entspricht. Die SSID beschreibt typischerweise den klassischen Netzwerknamen eines WLANs.

Ein ausgesendeter Verwaltungsdatenblock 48 ist somit einzigartig, da jede Datenvermittlungseinheit 12 eines Systems 10 einen eigenen Verwaltungsdatenblock 48 übermittelt.

Die Datenvermittlungseinheit 12 sendet nun diesen Verwaltungsdatenblock 48 über die zweite Schnittstelle 20 aus, wobei die Software 24 einen Pseudo-Empfänger simulieren kann, sollte dies erforderlich sein. Der Pseudo-Empfänger suggeriert eine Rückmeldung eines mobilen Endgeräts 14, welche in Wirklichkeit nicht stattfindet.

Ein sich im Sendekreis befindliches mobiles Endgerät 14, welches eine Schnittstelle 26 aufweist, die aufgrund des genutzten Frequenzbereichs derart eingerichtet ist, dass sie diese bestimmten Daten empfangen kann, empfängt den Verwaltungsdatenblock 48, der von einer Datenvermittlungseinheit 12 ausgesendet worden ist.

Der empfangene Verwaltungsdatenblock 48 wird von der auf dem mobilen Endgerät 14 implementierten Software 28, die beispielsweise als App ausgeführt sein kann, analysiert, indem der feste, nicht einstellbare Namensanteil 50 aus dem Verwaltungsdatenblock 48 überprüft wird. Somit wird der empfangene Verwaltungsdatenblock 48 einem System 10 zugeordnet.

Nach erfolgreicher Überprüfung durch die Software 28 maskiert diese den Verwaltungsdatenblock 48 auf den variablen Namensanteil 52 und speichert diesen auf einem Speichersatz 60 ab, der auf dem mobilen Endgerät 14 vorhanden ist.

Zusätzlich maskiert die Software 28 den Verwaltungsdatenblock 48 auf den Serviceanteil 54 und speichert diesen ebenfalls auf dem Speichersatz 60 ab. Durch Maskierung des Serviceanteils 54 kann die Software 28 das mobile Endgerät 14 auf den Empfang der Daten über den monodirektionale Übertragungsweg 44 einrichten, da die Informationen zu dem benutzten Kanal zur Datenübertragung der Datenpakete in dem Serviceanteil 54 hinterlegt sind.

Sollten sich mehrere Datenvermittlungseinrichtungen 12 in dem Empfangskreis des mobilen Endgeräts 14 befinden, so erstellt die Software 28 eine Liste, die als übergeordnete Ebene die verschiedenen Systeme 10 anzeigt, also die festen, nicht einstellbaren Namensanteile 50 des Verwaltungsdatenblocks 48, sofern Datenvermittlungseinrichtungen 12 aus verschiedenen Systemen 10 sich im Empfangskreis befinden. In einer untergeordneten Ebene stellt die Software 28 die empfangenen Datenvermittlungseinrichtungen 12 eines Systems 10 dar, wobei diese sich aufgrund des variablen Namens 52 unterscheiden, der im Verwaltungsdatenblock 48 hinterlegt ist und einmalig für eine Datenvermittlungseinrichtung 12 in einem System 10 ist.

Ein Nutzer des mobilen Endgeräts 14 kann anhand der von der Software 28 erstellten Liste somit zunächst ein übergeordnetes System 10 und danach eine dem System 10 untergeordnete Datenvermittlungseinheit 12 wählen.

Sollte die Auswahl eine Rückmeldung erfordern, so kann die Software 28 einen Pseudo-Empfänger simulieren, an den die Rückmeldung adressiert ist. Dies geschieht analog zu der Simulation eines Pseudo-Empfängers durch die Software der Datenvermittlungseinheit 12.

Die Datenvermittlungseinrichtung 12 sendet unterdessen auf dem freien Kanal über die zweite Schnittstelle 20 Datenpakete, die Informationen wie Sprach-, Text-oder Bilddaten umfassen. Sollte die Datenvermittlungseinrichtung 12 eine Rückmeldung voraussetzen, so kann die Software 24 wieder einen Pseudo-Empfänger simulieren, an den die Rückmeldung gesendet wird.

Somit wird aufgrund der Software 24 der Datenvermittlungseinheit 12 und der Software 28 des mobilen Endgeräts 14 eine bidirektionale Datenübertragung simuliert werden, obwohl lediglich eine monodirektionale Datenübertragung 44 stattfindet.

Die über die zweite Schnittstelle 20 über die monodirektionale Datenübertragung 44 ausgesandten Datenpakete werden von dem mobilen Endgerät 14 empfangen und können direkt wiedergegeben werden oder aber auf dem Speicherchip 60 gespeichert werden, sodass sie zu einem späteren Zeitpunkt wiedergegeben werden können.

Als konkreter Anwendungsfall ergibt sich beispielsweise die Übermittlung von Daten in einem Museum, wobei Daten an ein mobiles Endgerät 14 in Form eines Smartphones übertragen werden. Die Software 28 ist dabei eine App, die der Nutzer N herunterladen kann.

In dem Museum sind in den verschiedenen Räumen Datenvermittlungseinheiten 12 aufgestellt, die aufgrund ihrer portablen Ausführungsform versteckt werden können.

Ein System 10 besteht beispielsweise aus einem Satz von Datenvermittlungseinheiten 12, die sich auf Kunstgemälde in einem Raum des Museums beziehen. Die unterschiedlichen Datenvermittlungseinheiten 12 können dabei Informationen zu den Bildern in verschiedenen Sprachen aufweisen.

In einem nächsten Raum befindet sich ein weiteres System 10, welches wiederum Datenvermittlungseinheiten 12 aufweist, die Informationen zu den Kunstobjekten in dem entsprechen Raum bereitstellen.

Der Besitzer B der Daten kann nun beim Errichten einer neuen Ausstellung in dem Museum Daten über die als Server ausgeführte Datenverarbeitungseinheit 16 freigeben, sodass diese an die einzelnen Datenvermittlungseinheiten 12 überspielt werden. Das Überspielen der Daten kann über das Mobilfunknetz erfolgen, sodass die Datenverarbeitungseinheit 16 an einem entfernten Ort stehen kann.

Die Daten werden an die entsprechende Datenvermittlungseinheiten 12 gespielt, wobei diese die Daten auf ihren Speichern 22 hinterlegen.

Die Datenvermittlungseinheiten 12 eines Systems 10 enthalten dabei als festen Namensanteil die Raumnummer bzw. die Bezeichnung des Raums, sodass diese dem Raum, in dem sie die Daten aussenden, zugeordnet werden können. Als variabler Namensanteil können die zu einem System 10 gehörenden Datenvermittlungseinheiten 12 dann verschiedene Sprachinformationen zu den einzelnen Exponaten aufweisen, sodass die variablen Namen der Datenvermittlungseinheiten 12 beispielsweise "deutsch", "english" und "francais" sind.

Die Datenvermittlungseinheiten 12 haben zuvor einen passiven Scan durchgeführt und einen freien Kanal in dem Frequenzbereich der zweiten Schnittstelle 20 gefunden, dessen Informationen in den Serviceanteil 54 des Verwaltungsdatenblocks 48 geschrieben worden ist.

Diese Verwaltungsdatenblöcke 48 werden von den einzelnen Datenvermittlungseinheiten 12 in den Raum gesendet, sodass ein mobiles Endgerät 14 auf den Empfang der Daten eingerichtet wird, sofern die Software 28 des mobilen Endgeräts 14 aktiviert ist.

Das Starten der Software 28 ermöglicht das Einrichten des mobilen Endgeräts für den Empfang der Daten von den Datenvermittlungseinheiten 12, wobei die Software 28 eine Liste erstellt, die dem Nutzer N auf dem Bildschirm 30 angezeigt wird, sodass dieser sich für eine Sprache entscheiden kann. Nach Auswahl der Sprache werden von der Software 28 nur noch die Informationen der zugehörigen Datenvermittlungseinheit 12 angezeigt bzw. wiedergegeben.

Betritt der Nutzer N einen neuen Raum, so begibt er sich in ein neues System 10. Die Software 28 erkennt dies und ermittelt aufgrund der empfangenen Verwaltungsdatenblöcke 48 die entsprechende Fortsetzung, wobei dies aufgrund einer sinnvollen Bezeichnung der variablen Namensanteile 52 möglich ist.

Die Informationen der gewählten Sprache "deutsch" aus Raum A, die die Datenvermittlungseinheit 12 gesendet hat, die dem Raum A und den deutschen Sprachinformationen zugeordnet ist, werden bei Betreten des Raums B nicht mehr wiedergegeben, da kein Empfang dieser Daten vorliegt. In dem Raum B werden jedoch die Informationen der Datenvermittlungseinheit 12 aus dem Raum B in der Sprache "deutsch" wiedergegeben. Die Software 28 kann somit zwei Systeme 10 ineinander übergehen lassen.

Der Nutzer 10 kann somit durch die Räume eines Museums schreiten und erhält Informationen zu den Exponaten, wobei der Nutzer N lediglich einmalig seine Sprachoption auswählen muss. Der Datenaustausch erfolgt dabei auf einem monodirektionalen Weg, sodass eine einfache und schnelle Kommunikation möglich ist, die zudem energiearm ist.

## Patentansprüche

1. System (10) mit wenigstens einer Datenvermittlungseinheit (12) und wenigstens einem mobilen Endgerät (14), wobei die Datenvermittlungseinheit (12) einen Speicher (22), eine erste Schnittstelle (18), die eingerichtet ist, um bidirektional Daten zu übertragen, und eine zweite Schnittstelle (20) umfasst, die eingerichtet ist, um monodirektional Daten an das mobile Endgerät (14) zu übertragen, wobei die Datenvermittlungseinheit (12) ferner eingerichtet ist, um über die zweite Schnittstelle (20) Informationsbestandteile an das mobile Endgerät (14) zu übertragen und um das mobile Endgerät (14) für die monodirektionale Übertragung (44) von Daten einzurichten, **dadurch gekennzeichnet, dass** das mobile Endgerät (14) eingerichtet ist, um Daten der zweiten Schnittstelle (20) der Datenvermittlungseinheit (12) zu empfangen, wobei ein Pseudo-Empfänger eingerichtet ist, der eine Empfangsadresse simuliert, wenn diese für die Kommunikation einer Rückmeldung benötigt wird, sodass lediglich eine monodirektionale Kommunikation zwischen der Datenvermittlungseinheit (12) und dem mobilen Endgerät (14) stattfindet.

2. System (10) nach Anspruch 1, **dadurch gekennzeichnet, dass** eine Datenverarbeitungseinheit (16) vorgesehen ist, die eine Schnittstelle (32) aufweist, die mit der ersten Schnittstelle (18) der Datenvermittlungseinheit (12) kommuniziert.

3. System (10) nach Anspruch 2, **dadurch gekennzeichnet, dass** die Datenverarbeitungseinheit (16) eine weitere Schnittstelle (34) aufweist.

4. System (10) nach einem der vorhergehenden Ansprüche, **dadurch gekennzeichnet, dass** die Datenvermittlungseinheit (12) über die zweite Schnittstelle (20) einen Verwaltungsdatenblock (48) überträgt.

5. System (10) nach Anspruch 4, **dadurch gekennzeichnet, dass** der Verwaltungsdatenblock (48) wenigstens einen ersten Informationsbestandteil hat, der einen festen, nicht einstellbaren Namensanteil (50) aufweist.

6. System (10) nach Anspruch 4 oder 5, **dadurch gekennzeichnet, dass** der Verwaltungsdatenblock (48) einen zweiten Informationsbestandteil hat, der einen variablen Namensanteil (52) aufweist.

7. System (10) nach einem der Ansprüche 4 bis 6, **dadurch gekennzeichnet, dass** der Verwaltungsdatenblock (48) einen dritten Informationsbestandteil hat, der einen Serviceanteil (54) aufweist.

8. System (10) nach einem der vorhergehenden Ansprüche, **dadurch gekennzeichnet, dass** die Datenvermittlungseinheit (12) eingerichtet ist, um einen Pseudo-Empfänger zu simulieren.

9. System (10) nach einem der vorhergehenden Ansprüche, **dadurch gekennzeichnet, dass** das mobile Endgerät (14) eingerichtet ist, um einen empfangenen Verwaltungsdatenblock (48) der Datenvermittlungseinheit (12) in die Informationsbestandteile zu maskieren.

10. System (10) nach einem der vorhergehenden Ansprüche, **dadurch gekennzeichnet, dass** eine Software (28) auf dem mobilen Endgerät (14) vorgesehen ist, die eine Liste aller empfangbaren Datenvermittlungseinheiten (12) erstellt, wobei eine graphische Oberfläche (30) die Liste anzeigt, sodass ein Benutzer (B) des mobilen Endgeräts (14) eine Datenvermittlungseinheit (12) zur Übertragung auswählen kann.

11. System (10) nach Anspruch 10, **dadurch gekennzeichnet, dass** das mobile Endgerät (14) dem Benutzer (B) einen Bestandteil des Verwaltungsdatenblocks (48) über die graphische Oberfläche (30) anzeigt.

12. Verfahren zur Datenübertragung mit einem System (10) nach einem der vorhergehenden Ansprüche, das die folgenden Schritte umfasst:
a) Durchführen eines passiven Scans durch die Datenvermittlungseinheit (12), um einen freien Kanal zu finden,
b) der gefundene freie Kanal wird seitens der Datenvermittlungseinheit (12) in einen Informationsbestandteil eines Verwaltungsdatenblocks (48) geschrieben,
c) die Datenvermittlungseinheit (12) überträgt den Verwaltungsdatenblock (48),
d) das mobile Endgerät (14) empfängt den von der Datenvermittlungseinheit (12) ausgesendeten Verwaltungsdatenblock (48) und überprüft diesen,
e) die Datenvermittlungseinheit (12) überträgt Datenpakete an einen Pseudo-Empfänger der Datenvermittlungseinheit, der eine Rückmeldung des mobilen Endgeräts (14) suggeriert, die in Wirklichkeit nicht stattfindet,
f) das mobile Endgerät (14) empfängt Datenpakete von der Datenvermittlungseinheit (12) und simuliert einen Pseudo-Empfänger mit einer Empfangsadresse, wenn dies für die Kommunikation einer Rückmeldung benötigt wird, sodass lediglich eine monodirektionale Kommunikation zwischen der Datenvermittlungseinheit (12) und dem mobilen Endgerät (14) stattfindet.
g) das mobile Endgerät (14) gibt die empfangenen Datenpakete direkt wieder oder speichert diese Datenpakete auf einem auf dem mobilen Endgerät (14) vorhandenen Speicher (60).

13. Verfahren nach Anspruch 12, **dadurch gekennzeichnet, dass** der passive Scan durchgeführt wird, um den freien Kanal im Frequenzbereich der zweiten Schnittstelle (20) zu finden.

14. Verfahren nach Anspruch 12 oder 13, **dadurch gekennzeichnet, dass** der gefundene freie Kanal in den Serviceanteil (54) des Verwaltungsdatenblocks (48) geschrieben wird.

15. Verfahren nach einem der Ansprüche 12 bis 14, **dadurch gekennzeichnet, dass** die Datenvermittlungseinheit (12) den Verwaltungsdatenblock (48) über die zweite Schnittstelle (20) überträgt.

## Claims

1. A system (10) having at least one data switching unit (12) and at least one mobile terminal (14), the data switching unit (12) comprising a memory (22), a first interface (18) arranged to transmit data in a bidirectional manner, and a second interface (20) arranged to transmit data to the mobile terminal (14) in a monodirectional manner, the data switching unit (12) being further arranged to transmit information elements to the mobile terminal (14) via the second interface (20) and to arrange the mobile terminal (14) for the monodirectional transmission (44) of data, **characterized in that** the mobile terminal (14) is arranged to receive data of the second interface (20) of the data switching unit (12), a pseudoreceiver being provided which simulates a receiving address when the latter is required for the communication of an acknowledgement such that merely a monodirectional communication takes place between the data switching unit (12) and the mobile terminal (14).

2. The system (10) according to claim 1, **characterized in that** a data processing unit (16) is provided which has an interface (32) communicating with the first interface (18) of the data switching unit (12).

3. The system (10) according to claim 2, **characterized in that** the data processing unit (16) has a further interface (34).

4. The system (10) according to any of the preceding claims, **characterized in that** the data switching unit (12) transmits a management data block (48) via the second interface (20).

5. The system (10) according to claim 4, **characterized in that** the management data block (48) at least comprises a first information element having a fixed, non-adjustable name component (50).

6. The system (10) according to claim 4 or 5, **characterized in that** the management data block (48) comprises a second information element which has a variable name component (52).

7. The system (10) according to any of claims 4 to 6, **characterized in that** the management data block (48) comprises a third information element which has a service component (54).

8. The system (10) according to any of the preceding claims, **characterized in that** the data switching unit (12) is arranged to simulate a pseudoreceiver.

9. The system (10) according to any of the preceding claims, **characterized in that** the mobile terminal (14) is arranged to mask a received management data block (48) of the data switching unit (12) in the information elements.

10. The system (10) according to any of the preceding claims, **characterized in that** a software (28) is provided on the mobile terminal (14) which draws up a list of all receivable data switching units (12), a graphic surface (30) displaying the list such that a user (B) of the mobile terminal (14) can choose a data switching unit (12) for transmission.

11. The system (10) according to claim 10, **characterized in that** the mobile terminal (14) shows the user (B) a component of the management data block (48) via the graphic surface (30).

12. A method of data transmission using a system (10) according to any of the preceding claims, the method comprising the following steps:
a) execution of a passive scan by the data switching unit (12) to find a free channel,
b) the free channel found is written in an information element of a management data block (48) by the data switching unit (12),
c) the data switching unit (12) transmits the management data block (48),
d) the mobile terminal (14) receives the management data block (48) sent by the data switching unit (12) and verifies the latter,
e) the data switching unit (12) transmits data packets to a pseudoreceiver of the data switching unit which suggests an acknowledgement of the mobile terminal (14) which in reality does not occur,
f) the mobile terminal (14) receives data packets from the data switching unit (12) and simulates a pseudoreceiver with a receiving address if this is required for the communication of an acknowledgement such that merely a monodirectional communication takes place between the data switching unit (12) and the mobile terminal (14),
g) the mobile terminal (14) directly reproduces the received data packets or stores these data packets on a memory (60) present on the mobile terminal (14).

13. The method according to claim 12, **characterized in that** the passive scan is carried out to find the free channel in the frequency range of the second interface (20).

14. The method according to claim 12 or 13, **characterized in that** the free channel found is written in the service component (54) of the management data block (48).

15. The method according to any of claims 12 to 14, **characterized in that** the data switching unit (12) transmits the management data block (48) via the second interface (20).

## Revendications

1. Système (10) présentant au moins une unité de transfert de données (12) et au moins un terminal mobile (14), l'unité de transfert de données (12) comprenant une mémoire (22), une première interface (18) conçue pour transmettre des données de manière bidirectionnelle, et une deuxième interface (20) conçue pour transmettre des données de manière monodirectionnelle au terminal mobile (14), l'unité de transfert de données (12) étant en outre conçue pour transmettre des éléments d'information au terminal mobile (14) par l'intermédiaire de la deuxième interface (20) et pour aménager le terminal mobile (14) pour la transmission monodirectionnelle (44) de données, **caractérisé en ce que** le terminal mobile (14) est conçu pour recevoir des données de la deuxième interface (20) de l'unité de transfert de données (12), un pseudorécepteur étant prévu, lequel simule une adresse de réception lorsque celle-ci est nécessaire pour la communication d'une information en retour, de sorte que seule une communication monodirectionnelle a lieu entre l'unité de transfert de données (12) et le terminal mobile (14).

2. Système (10) selon la revendication 1, **caractérisé en ce qu'**il est prévu une unité de traitement de données (16) qui présente une interface (32) communicant avec la première interface (18) de l'unité de transfert de données (12).

3. Système (10) selon la revendication 2, **caractérisé en ce que** l'unité de traitement de données (16) présente une interface supplémentaire (34).

4. Système (10) selon l'une des revendications précédentes, **caractérisé en ce que** l'unité de transfert de données (12) transmet un bloc de données de gestion (48) par l'intermédiaire de la deuxième interface (20).

5. Système (10) selon la revendication 4, **caractérisé en ce que** le bloc de données de gestion (48) comporte au moins un premier élément d'information qui présente un composant de nom (50) fixe et non-ajustable.

6. Système (10) selon la revendication 4 ou 5, **caractérisé en ce que** le bloc de données de gestion (48) comporte un deuxième élément d'information qui présente un composant de nom (52) variable.

7. Système (10) selon l'une des revendications 4 à 6, **caractérisé en ce que** le bloc de données de gestion (48) comporte un troisième élément d'information qui présente un composant de service (54).

8. Système (10) selon l'une des revendications précédentes, **caractérisé en ce que** l'unité de transfert de données (12) est conçue pour simuler un pseudo-récepteur.

9. Système (10) selon l'une des revendications précédentes, **caractérisé en ce que** le terminal mobile (14) est conçu pour masquer un bloc de données de gestion (48) de l'unité de transfert de données (12) reçu dans les éléments d'information.

10. Système (10) selon l'une des revendications précédentes, **caractérisé en ce qu'**il est prévu un logiciel (28) sur le terminal mobile (14), lequel établit une liste de toutes les unités de transfert de données (12) recevables, une surface graphique (30) affichant la liste de sorte qu'un utilisateur (B) du terminal mobile (14) peut choisir une unité de transfert de données (12) pour une transmission.

11. Système (10) selon la revendication 10, **caractérisé en ce que** le terminal mobile (14) affiche un composant du bloc de données de gestion (48) à l'utilisateur (B) par l'intermédiaire de la surface graphique (30).

12. Procédé de transmission de données au moyen d'un système (10) selon l'une des revendications précédentes, le procédé comprenant les étapes suivantes:
a) réalisation d'un balayage passif par l'unité de transfert de données (12) afin de trouver un canal libre,
b) le canal libre trouvé est enregistré dans un élément d'information d'un bloc de données de gestion (48) par l'unité de transfert de données (12),
c) l'unité de transfert de données (12) transmet le bloc de données de gestion (48),
d) le terminal mobile (14) reçoit le bloc de données de gestion (48) envoyé par l'unité de transfert de données (12) et vérifie ce dernier,
e) l'unité de transfert de données (12) transmet des paquets de données à un pseudo-récepteur de l'unité de transfert de données qui suggère une information en retour du terminal mobile (14), laquelle n'a pas lieu en réalité,
f) le terminal mobile (14) reçoit des paquets de données de l'unité de transfert de données (12) et simule un pseudo-récepteur avec une adresse de réception lorsque ceci est nécessaire pour la communication d'une information en retour, de sorte que seule une communication monodirectionnelle a lieu entre l'unité de transfert de données (12) et le terminal mobile (14),
g) le terminal mobile (14) reproduit directement les paquets de données reçus ou mémorise ces paquets de données sur une mémoire (60) présente sur le terminal mobile (14).

13. Procédé selon la revendication 12, **caractérisé en ce que** le balayage passif est réalisé afin de trouver le canal libre dans la gamme de fréquences de la deuxième interface (20).

14. Procédé selon la revendication 12 ou 13, **caractérisé en ce que** le canal libre trouvé est enregistré dans le composant de service (54) du bloc de données de gestion (48).

15. Procédé selon l'une des revendications 12 à 14, **caractérisé en ce que** l'unité de transfert de données (12) transmet le bloc de données de gestion (48) par l'intermédiaire de la deuxième interface (20).
